(19) Europäisches Patentamt / European Patent Office / Office européen des brevets

(11) **EP 4 608 031 A1**

(12) **EUROPEAN PATENT APPLICATION**
published in accordance with Art. 153(4) EPC

(43) Date of publication:
**27.08.2025 Bulletin 2025/35**

(21) Application number: **23879481.2**

(22) Date of filing: **30.08.2023**

(51) International Patent Classification (IPC):
*H04W 72/044* (2023.01)    *H04L 27/26* (2006.01)
*H04W 16/14* (2009.01)    *H04W 72/0446* (2023.01)
*H04W 72/0453* (2023.01)    *H04W 72/20* (2023.01)

(52) Cooperative Patent Classification (CPC):
**H04L 27/26; H04W 16/14; H04W 72/044;
H04W 72/0446; H04W 72/0453; H04W 72/20**

(86) International application number:
**PCT/JP2023/031435**

(87) International publication number:
**WO 2024/084829 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.10.2022 JP 2022167985**

(71) Applicant: **NTT DOCOMO, INC.
Tokyo 100-6150 (JP)**

(72) Inventors:
• **SHIBAIKE, Naoya**
  **Tokyo 100-6150 (JP)**
• **NAGATA, Satoshi**
  **Tokyo 100-6150 (JP)**

(74) Representative: **Hoffmann Eitle
Patent- und Rechtsanwälte PartmbB
Arabellastraße 30
81925 München (DE)**

(54) **TERMINAL AND COMMUNICATION METHOD**

(57)    A terminal includes: a reception unit configured to receive, from a base station, a parameter related to frequency hopping to be applied to SRS (Sounding reference signal) in an unlicensed band; and a transmission unit configured to perform transmission to the base station using a plurality of RB (Resource block) sets by applying the frequency hopping to the SRS, based on the parameter.

## FIG.8

EP 4 608 031 A1

**Description**

FIELD OF THE INVENTION

The present invention relates to a terminal and a communication method in a wireless communication system.

BACKGROUND OF THE INVENTION

Regarding NR (New Radio) (also referred to as "5G"), or a successor system to LTE (Long Term Evolution), technologies have been discussed which satisfy the following requirements: a high capacity system, high data transmission rate, low delay, simultaneous connection of multiple terminals, low cost, power saving, etc. (for example, Non-Patent Document 1).

In 3GPP (registered trademark) NR release 17, utilization of frequency bands higher than that of the conventional release (for example, Non-Patent Document 2) has been discussed. For example, applicable numerologies including subcarrier spacings, channel bandwidths, etc., physical layer design, and possible failures in actual wireless communication in the 52.6 GHz to 71 GHz frequency band have been discussed.

CITATION LIST

Non-Patent Document

Non-Patent Document 1: 3GPP TS 38.300 V17.2.0 (2022-09)
Non-Patent Document 2: 3GPP TS 38.306 V17.2.0 (2022-09)
Non-Patent Document 3: 3GPP TS 38.331 V17.2.0 (2022-09)

SUMMARY OF THE INVENTION

TECHNICAL PROBLEM

In the frequency band that includes frequencies higher than the conventional frequencies and that is to be newly deployed, application of frequency hopping is supported when transmitting a channel or a signal in UL (Uplink). However, a method of frequency hopping that is to be applied in a case of introducing an RB (Resource block) set corresponding to carriers defined in the regulations has not been specified.

The present invention has been made in view of the above points, and it is an object of the present invention to flexibly apply frequency hopping in the wireless communication system.

SOLUTION TO PROBLEM

According to the disclosed technique, a terminal is provided. The terminal includes: a reception unit configured to receive, from a base station, a parameter related to frequency hopping to be applied to SRS (Sounding reference signal) in an unlicensed band; and a transmission unit configured to perform transmission to the base station using a plurality of RB (Resource block) sets by applying the frequency hopping to the SRS, based on the parameter.

ADVANTAGEOUS EFFECTS OF INVENTION

According to the disclosed technique, frequency hopping can be flexibly applied in the wireless communication system.

BRIEF DESCRIPTION OF THE DRAWINGS

[Fig. 1] is a drawing illustrating a configuration example of a wireless communication system in an embodiment of the present invention.
[Fig. 2] is a drawing illustrating an example of a frequency range in an embodiment of the present invention.
[Fig. 3] is a flowchart for describing an example of transmission in an embodiment of the present invention.

[Fig. 4] is a drawing illustrating an example (1) of frequency hopping in an embodiment of the present invention.

[Fig. 5] is a drawing illustrating an example (2) of frequency hopping in an embodiment of the present invention.

[Fig. 6] is a drawing illustrating an example (3) of frequency hopping in an embodiment of the present invention.

[Fig. 7] is a drawing illustrating an example (4) of frequency hopping in an embodiment of the present invention.

[Fig. 8] is a drawing illustrating an example (5) of frequency hopping in an embodiment of the present invention.

[Fig. 9] is a drawing illustrating an example of a functional configuration of a base station 10 in an embodiment of the present invention.

[Fig. 10] is a drawing illustrating an example of a functional configuration of a terminal 20 in an embodiment of the present invention.

[Fig. 11] is a drawing illustrating an example of a hardware structure of the base station 10 or the terminal 20 in an embodiment of the present invention.

[Fig. 12] is a drawing illustrating an example of a structure of a vehicle 2001 in an embodiment of the present invention.

DETAILED DESCRIPTION OF THE PREFERRED EMBODIMENTS

In the following, while referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR), or wireless LAN (Local Area Network).

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, radio (wireless) parameters are "configured (set)" may mean that a predetermined value is pre-configured, or may mean that a radio parameter indicated by a base station 10 or a terminal 20 is configured.

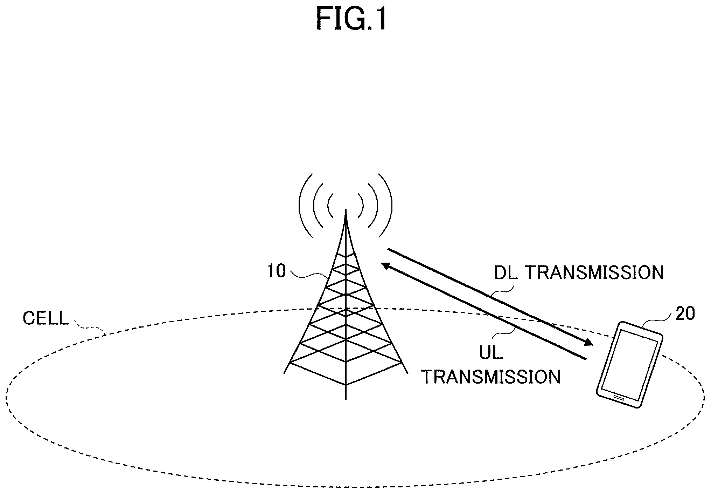

Fig. 1 is a drawing illustrating a configuration example of a wireless communication system according to an embodiment of the present invention. As illustrated in Fig. 1, a wireless communication system according to an embodiment of the present invention includes a base station 10 and a terminal 20. In Fig. 1, a single base station 10 and a single terminal 20 are illustrated as an example, but there may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. The base station 10 transmits a synchronization signal and system information to the terminal 20. The synchronization signal is, for example, an NR-PSS and an NR-SSS. The system information is transmitted via, for example, an NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smartphone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals.

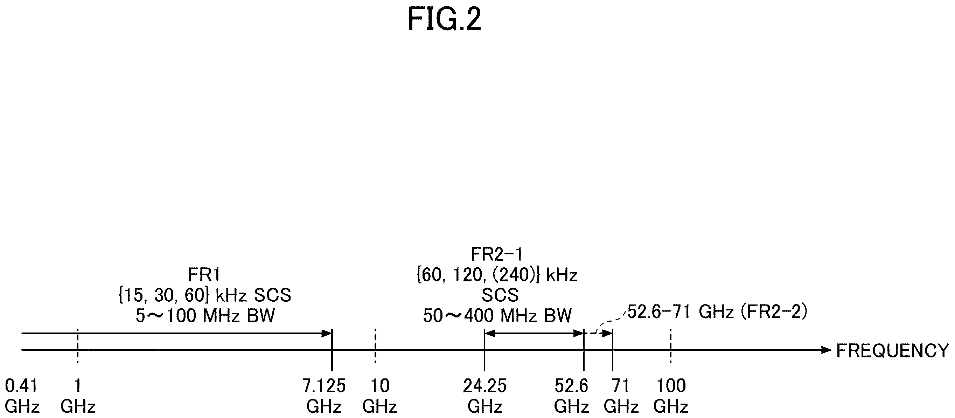

Fig. 2 is a drawing illustrating an example of a frequency band that is used in the wireless communication system. In the NR specifications of 3GPP Release 15 and Release 16, for example, an operation in a frequency band of 52. 6 GHz or more has been discussed. Note that, as shown in Fig. 2, FR (Frequency range) 1 in which current operation is defined is a frequency band from 410 MHz to 7. 125 GHz, SCS (Sub carrier spacing) is 15 kHz, 30 kHz, or 60 kHz, and bandwidth is from 5 MHz to 100 MHz.

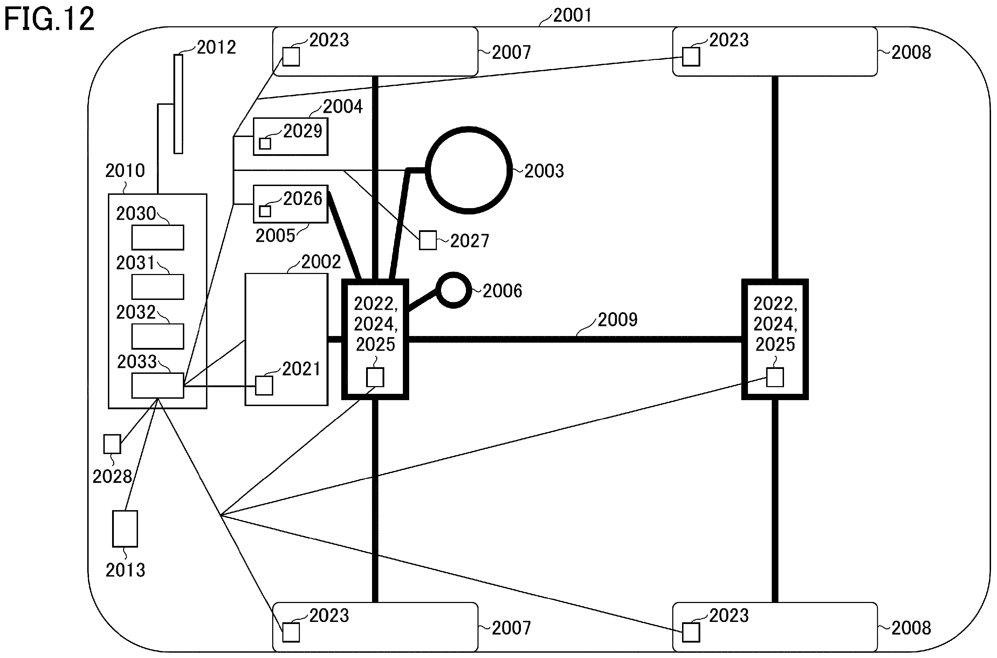

FR2-1 is a frequency band from 24.25 GHz to 52.6 GHz, SCS is 60kHz, 120 kHz or 240 kHz, and the bandwidth is from 50 MHz to 400 MHz. As illustrated in Fig. 12, FR2-2 may be assumed to be from 52.6 GHz to 71 GHz. Furthermore, a frequency band beyond 71 GHz may be assumed to be supported.

In order to reduce the load required for monitoring PDCCH (Physical Downlink Control Channel) in a frequency band to be newly deployed in which frequencies higher than the conventional frequency are used, increasing the monitoring period is being discussed. On the other hand, in order to ensure the scheduling flexibility even in a case where the PDCCH monitoring period is increased, supporting the scheduling of a plurality of PDSCHs (Physical Downlink Shared Channels) or a plurality of PUSCHs (Physical Uplink Shared Channels) via single DCI (Downlink Control Information) is being discussed.

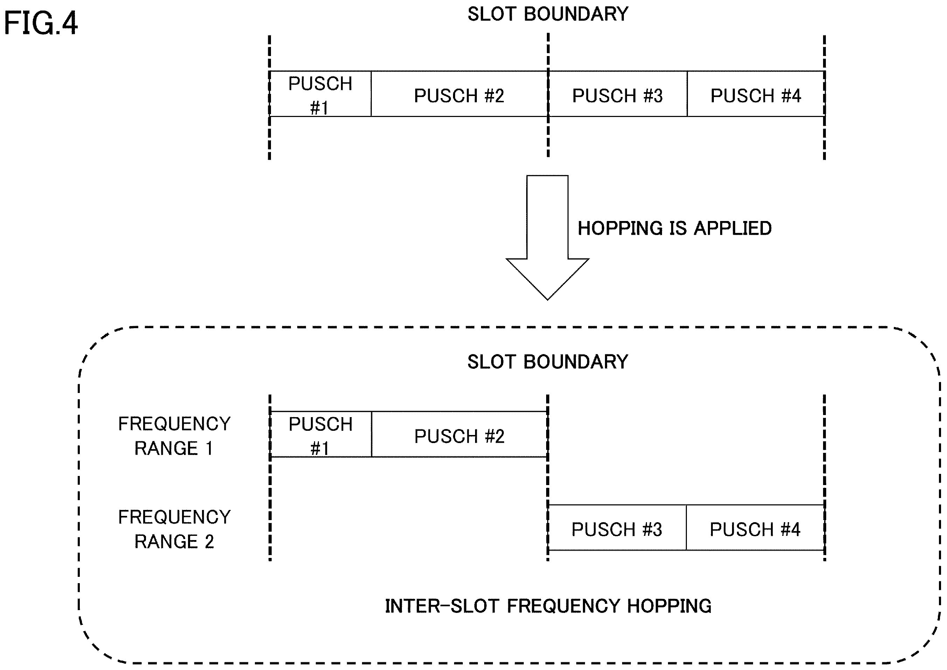

As a type of PUSCH repetition, the PUSCH repetition type A and the PUSCH repetition type B are supported. As illustrated in Fig. 4, in a case of the PUSCH repetition type A, the mapping type, SLIV, and K may be specified, and in a case of the PUSCH repetition type B, S, L, and K may be specified. It is to be noted that SLIV (Start and Length Indicator) indicates the start symbol and the length, and K indicates the repetition number. Note that the PUSCH repetition type A may be configured for the PUSCH mapping type A or for the PUSCH mapping type B. The PUSCH repetition type B may be configured only for the PUSCH mapping type B.

Here, in a case where a single PUSCH is scheduled by DCI format 0_1 or DCI format 0_2, the frequency hopping is supported in the resource allocation type 1.

In a case of the PUSCH repetition type A, the inter-slot frequency hopping and the intra-slot frequency hopping may be supported. In a case of the PUSCH repetition type B, the inter-repetition frequency hopping and the inter-slot frequency hopping may be supported.

The frequency hopping mode may be configured by RRC. In a case of the PUSCH repetition type A, the frequency hopping may be configured by a higher layer parameter frequencyHoppingDCI-0-2 with respect to the PUSCH transmission that is scheduled by DCI format 0_2, and the frequency hopping may be configured by a higher layer parameter frequencyHopping with respect to the PUSCH transmission that is scheduled by a DCI format other than DCI format 0_2.

In a case of the PUSCH repetition type B, the frequency hopping may be configured by a higher layer parameter frequencyHoppingDCI-0-2 with respect to the PUSCH transmission that is scheduled by DCI format 0_2, and the frequency hopping may be configured by a higher layer parameter frequencyHoppingDCI-0-1 with respect to the PUSCH transmission that is scheduled by DCI format 0_1.

With respect to the PUSCH that is scheduled by DCI, enabling or disabling of the frequency hopping may be determined based on the frequency hopping field of the DCI.

In Release 16, with respect to the above-described intra-slot hopping, PUSCH may be equally divided into the first hop and the second hop. In a case where the number of PUSCH symbols is an odd number, the second hop may be longer than the first hop by one symbol. With respect to the above-described inter-slot hopping, the first hop and the second hop may be alternately configured for each slot. With respect to the above-described inter-repetition hopping, the first hop and the second hop may be alternately configured for each repetition transmission.

Here, in the resource allocation type 2 in Release 16 NR-U (unlicensed), the frequency hopping is not supported, and thus, the frequency hopping is not expected to be used in a case where multiple PUSCH transmissions are scheduled. On the other hand, in Release 17 NR 52.6 GHz to 71 GHz, the resource allocation type 2 is not applied to the PUSCH transmission, and thus, the following items are required to be discussed: whether or not the frequency hopping is to be applied to scheduling of the multiple PUSCHs; and how to apply the frequency hopping. Accordingly, the following options may be applied to the frequency hopping of the multiple PUSCH transmissions.

Option 1) With respect to scheduling of the multiple PUSCHs, the PUSCH frequency hopping is not required to be supported.

Option 2) With respect to scheduling of the multiple PUSCHs, the PUSCH frequency hopping may be supported. Whether or not the frequency hopping is to be applied may be determined based on the frequency hopping indication field of the scheduling DCI, or may be determined by a new RRC parameter, for example, EnablingFrequencyHoppingMulti-Pusch.

Option 2-1) With respect to scheduling of the multiple PUSCHs, an additional frequency hopping parameter is not required to be configured. In other words, the conventional frequency hopping parameter, for example, FrequencyHopping, frequencyHoppingDCI-0-1, or frequencyHoppingDCI-0-2 may be used for indicating the frequency hopping with respect to scheduling of the multiple PUSCHs and the single-PUSCH scheduling.

Option 2-1-1) The conventional frequency hopping method, that is, the inter-slot frequency hopping and the intra-slot frequency hopping may be applied to scheduling of the multiple PUSCHs according to single DCI. It is to be noted that the frequency hopping with respect to the repetition transmission is not required to be expected to be used.

In a case where a DCI format for scheduling the multiple PUSCHs is used for scheduling of the repetition transmission of single PUSCH and where the PUSCH repetition type A is configured for the PUSCH scheduled by the DCI format, either the inter-slot frequency hopping or the intra-slot frequency hopping may be configured by the frequency hopping parameter. In a case where the inter-slot frequency hopping is to be configured, the inter-slot frequency hopping is configured if multiple PUSCHs are scheduled in multiple slots, and the frequency hopping is not required to be applied if the PUSCH is scheduled in a single slot. In a case where the intra-slot frequency hopping is to be configured, the intra-slot frequency hopping is applied to one or more PUSCHs within a slot, and each hop may include one or more PUSCHs if multiple PUSCHs are scheduled in a slot.

In a case where a DCI format for scheduling the multiple PUSCHs is used for scheduling the repetition transmission of single PUSCH, and where the PUSCH repetition type B is configured for the PUSCH scheduled by the DCI format, either the inter-repetition frequency hopping or the inter-slot frequency hopping may be configured by the frequency hopping parameter. In a case where the inter-slot frequency hopping is to be configured, the inter-slot frequency hopping is configured if multiple PUSCHs are scheduled in multiple slots, and the RB allocation for each hop may be the same as that of the conventional inter-slot frequency hopping. The frequency hopping is not required to be applied if the PUSCH is scheduled in a single slot. In a case where the inter-repetition frequency hopping is configured, the frequency hopping is not required to be applied for scheduling of the multiple PUSCHs.

In a case where a DCI format for scheduling the multiple PUSCHs is not used for scheduling of the repetition transmission of single PUSCH, either the inter-slot frequency hopping or the intra-slot frequency hopping may be configured by the DCI format for scheduling the multiple PUSCHs.

It is to be noted that, in the above-described Option 2-1-1), there is no impact on the technical specifications of the RRC configuration.

Option 2-1-2) The enhanced frequency hopping method, that is, the inter-PUSCH frequency hopping and/or the intra-PUSCH frequency hopping may be applied to scheduling of the multiple PUSCHs. Details will be described below. With respect to the inter-slot frequency hopping and the intra-slot frequency hopping, none of them may be supported, one of them may be supported, or both of them may be supported for scheduling of the multiple PUSCHs.

In a case where a DCI format for scheduling the multiple PUSCHs is used for scheduling of the repetition transmission of single PUSCH, many candidate values may be configurable based on the frequency hopping parameter. In a case where a frequency hopping mode is not supported for scheduling of the multiple PUSCHs, the frequency hopping is not required to be applied to scheduling of the multiple PUSCHs. In a case where a frequency hopping mode is not supported for the single-PUSCH scheduling, the frequency hopping is not required to be applied to the single-PUSCH scheduling.

In a case where the PUSCH repetition type A is configured for the PUSCH scheduled by a DCI format, the inter-PUSCH frequency hopping, and/or the intra-PUSCH frequency hopping, and/or the inter-slot frequency hopping, and/or the intra-slot frequency hopping may be configurable as the candidate values for the frequency hopping parameter configuration. In a case where the inter-PUSCH frequency hopping is configured and the PUSCH is a single PUSCH, the frequency hopping is not required to be applied.

In a case where the PUSCH repetition type B is configured for the PUSCH scheduled by a DCI format, the inter-PUSCH frequency hopping, and/or the intra-PUSCH frequency hopping, and/or the inter-slot frequency hopping, and/or the inter-repetition frequency hopping may be configurable as the candidate values for the frequency hopping parameter configuration. In a case where the inter-PUSCH frequency hopping is configured and the PUSCH is a single PUSCH, the frequency hopping is not required to be applied. In a case where the inter-repetition frequency hopping is configured and the multiple PUSCHs without repetition configuration are scheduled, the frequency hopping is not required to be applied.

In a case where a DCI format for scheduling the multiple PUSCHs is not used for scheduling of the repetition transmission of single PUSCH, the candidate values for the frequency hopping parameter configuration that indicate: the inter-PUSCH frequency hopping; and/or the intra-PUSCH frequency hopping; and/or the inter-slot frequency hopping; and/or the intra-slot frequency hopping, may be configured by the DCI format for scheduling the multiple PUSCHs.

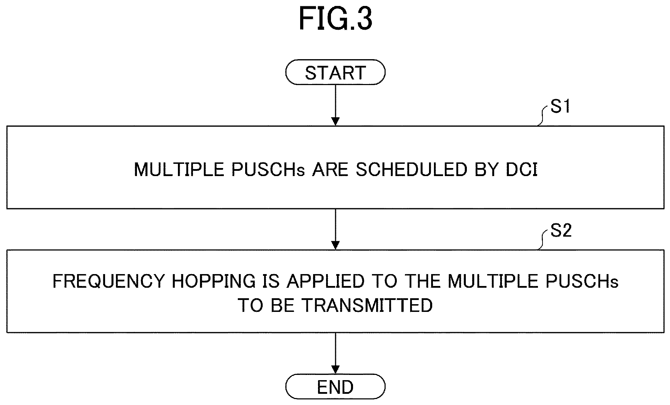

Fig. 3 is a flowchart for describing an example of transmission in an embodiment of the present invention. In step S1, multiple PUSCHs are scheduled for the terminal 20 by DCI by the base station 10. In subsequent step S2, the terminal 20 applies the frequency hopping to the multiple PUSCHs to be transmitted to the base station 10.

Fig. 4 is a drawing illustrating an example (1) of frequency hopping in an embodiment of the present invention. Fig. 4 illustrates an example of the inter-slot frequency hopping. As illustrated in Fig. 4, hops are alternately configured in the frequency ranges by using slot units.

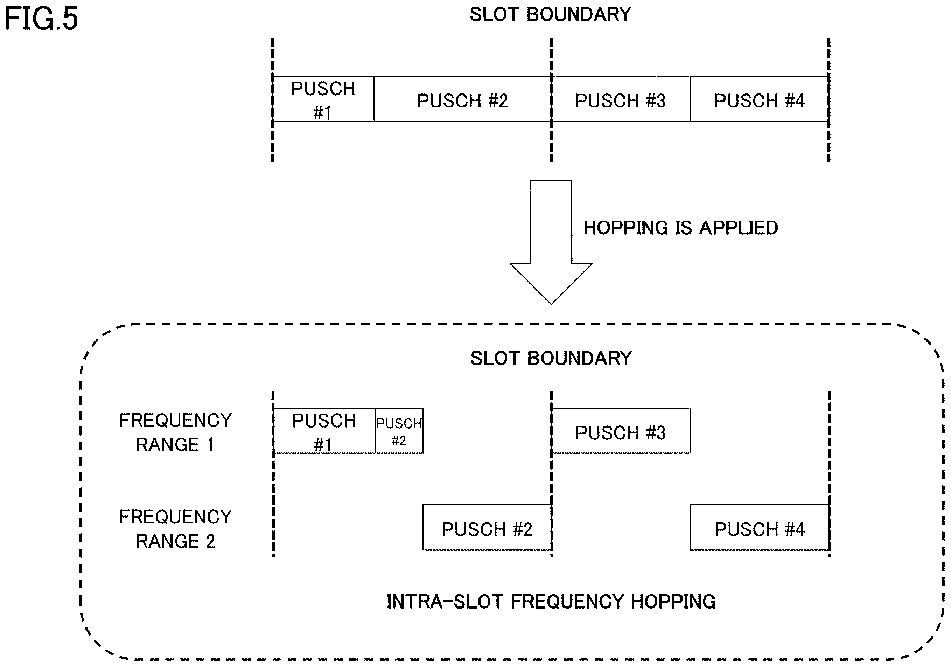

Fig. 5 is a drawing illustrating an example (2) of frequency hopping in an embodiment of the present invention. Fig. 5 illustrates an example of the intra-slot frequency hopping. As illustrated in Fig. 5, hops are alternately configured in the frequency ranges by using half slot units.

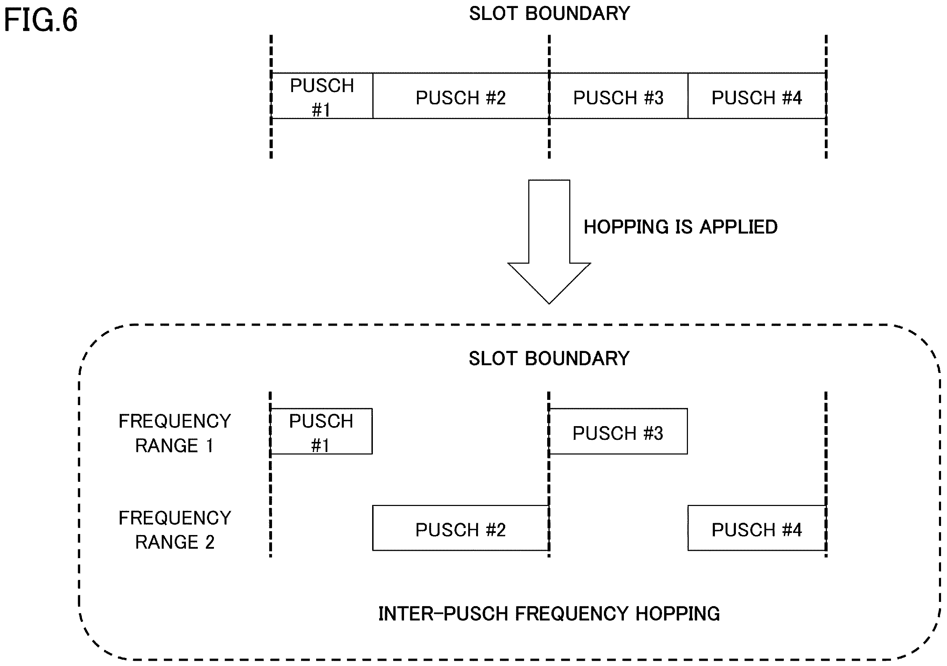

Fig. 6 is a drawing illustrating an example (3) of frequency hopping in an embodiment of the present invention. Fig. 6 illustrates an example of the inter-PUSCH frequency hopping. As illustrated in Fig. 6, hops are alternately configured in the frequency ranges by using PUSCH units.

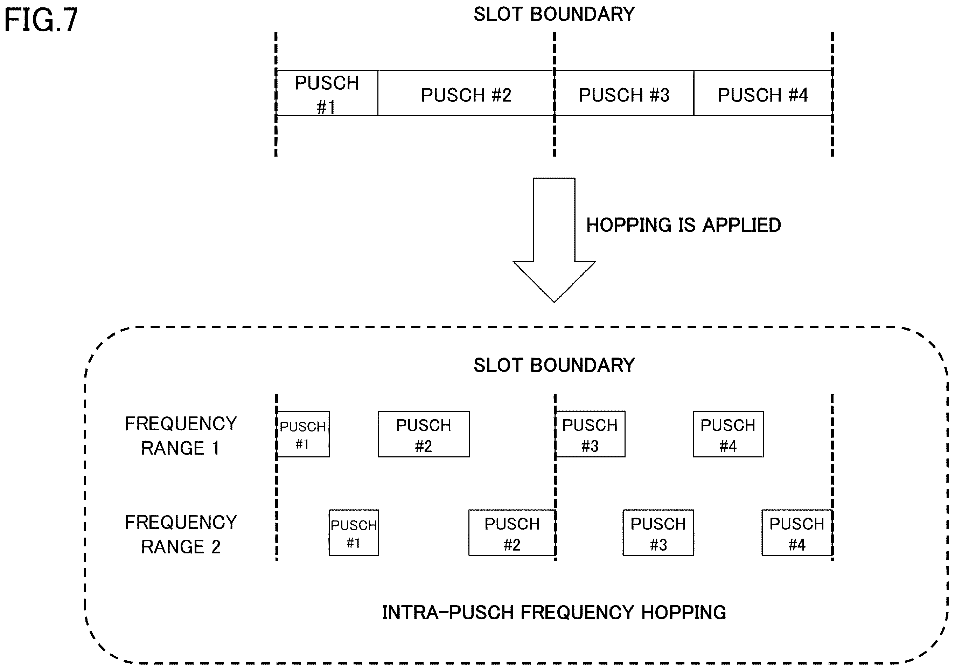

Fig. 7 is a drawing illustrating an example (4) of frequency hopping in an embodiment of the present invention. Fig. 7 illustrates an example of the intra-PUSCH frequency hopping. As illustrated in Fig. 7, hops are alternately configured in the frequency ranges in units of half-PUSCH.

Option 2-2) A new RRC parameter, for example, Multi-Pusch-FrequencyHopping, may be additionally configured in order to indicate the frequency hopping method that is applied to scheduling of the multiple PUSCHs. It is to be noted that the conventional frequency hopping parameter (for example, FrequencyHopping, frequencyHoppingDCI-01, frequencyHoppingDCI-0-2) may be configured in order to indicate the frequency hopping method that is applied to scheduling of a single PUSCH.

Option 2-2-1) The conventional frequency hopping method may be applied to scheduling of the multiple PUSCHs. The inter-slot frequency hopping and the intra-slot frequency hopping may be configurable based on Multi-Pusch-FrequencyHopping.

Option 2-2-2) The enhanced frequency hopping method may be applied to scheduling of the multiple PUSCHs. The inter-PUSCH frequency hopping and/or the intra-PUSCH frequency hopping may be applied to scheduling of the multiple PUSCHs. With respect to the inter-slot frequency hopping and the intra-slot frequency hopping, none of them may be supported, one of them may be supported, or both of them may be supported for scheduling of the multiple PUSCHs. The inter-PUSCH frequency hopping, and/or the intra-PUSCH frequency hopping, and/or the inter-slot frequency hopping, and/or the intra-slot frequency hopping may be configured by Multi-Pusch-FrequencyHopping.

In the above-described Option 2, in a case where the frequency hopping is supported with respect to scheduling of the multiple PUSCHs, the RB allocation for the frequency hopping method that may be supported may be as follows.

In a case where the inter-slot frequency hopping is applied to multiple PUSCHs in multiple slots, the RB allocation for each hop may be the same as that of the Release 16 inter-slot frequency hopping.

In a case where the intra-slot frequency hopping is applied to the multiple PUSCHs in the multiple slots, the RB allocation for each hop may be the same as that of the Release 16 intra-slot frequency hopping. With respect to the above-described case, a case is excluded in which multiple PUSCHs are scheduled by DCI and the multiple PUSCHs are allocated discontinuously in a slot. In a case where the multiple PUSCHs are allocated discontinuously in a slot, the target period of the frequency hopping starts from the starting symbol of the first PUSCH and ends at the ending symbol of the last PUSCH.

In a case where the inter-PUSCH frequency hopping is applied to scheduling of multiple PUSCHs, the starting RB of the n-th PUSCH is indicated by the following Math 1.

[Math 1]

$$RB_{start}(n) = \begin{cases} RB_{start} & n \bmod 2 = 0 \\ (RB_{start} + RB_{offset}) \bmod N_{BWP}^{size} & n \bmod 2 = 1 \end{cases}$$

As illustrated in Math 1, an even-numbered PUSCH is a hop without an offset, and an odd-numbered PUSCH is a hop with an offset.

In a case where the intra-PUSCH frequency hopping is applied to scheduling of multiple PUSCHs in multiple slots, the starting RBs of the first hop and the second hop is indicated by the following Math 2.

[Math 2]

$$RB_{start}(n) = \begin{cases} RB_{start} & i = 0 \\ (RB_{start} + RB_{offset}) \bmod N_{BWP}^{size} & i = 1 \end{cases}$$

As illustrated in Math 2, the first hop is a hop without an offset and the second hop is a hop with an offset. The number of symbols of the first hop is indicated by the following Math 3, and the number of symbols of the second hop is indicated by the following Math 4.

[Math 3]

$$\left\lfloor N_{symb}^{PUSCH,S}/2 \right\rfloor$$

[Math 4]

$$N_{symb}^{PUSCH,S} - \lfloor N_{symb}^{PUSCH,S}/2 \rfloor$$

It is to be noted that $N^{PUSCH,S}_{symb}$ in Math 3 and Math 4 is the length of PUSCH.

Here, in NR Release 16, the frequency hopping based on the resource allocation type 1 is supported for a single PUSCH that is scheduled by DCI format 0_1 or DCI format 0_2. The frequency hopping may be supported as described in the following 1) or 2).

1) The inter-slot frequency hopping and the intra-slot frequency hopping are supported for the PUSCH repetition type A.

2) The inter-repetition frequency hopping and the inter-slot frequency hopping are supported for the PUSCH repetition type B.

The frequency hopping mode may be configured by RRC signaling. In a case of the PUSCH repetition type A, the frequency hopping is configured by a higher layer parameter frequencyHoppingDCI-0-2 (refer to Non-Patent Document 3) for the PUSCH transmission scheduled by DCI format 0_2, and the frequency hopping is configured by a higher layer parameter frequencyHopping (refer to Non-Patent Document 3) for the PUSCH transmission scheduled by a DCI format other than DCI format 0_2.

In a case of the PUSCH repetition type B, the frequency hopping is configured by a higher layer parameter frequencyHoppingDCI-0-2 (refer to Non-Patent Document 3) for the PUSCH transmission scheduled by DCI format 0_2, and the frequency hopping is configured by a higher layer parameter frequencyHoppingDCI-0-1 (refer to Non-Patent Document 3) for the PUSCH transmission scheduled by DCI format 0_1.

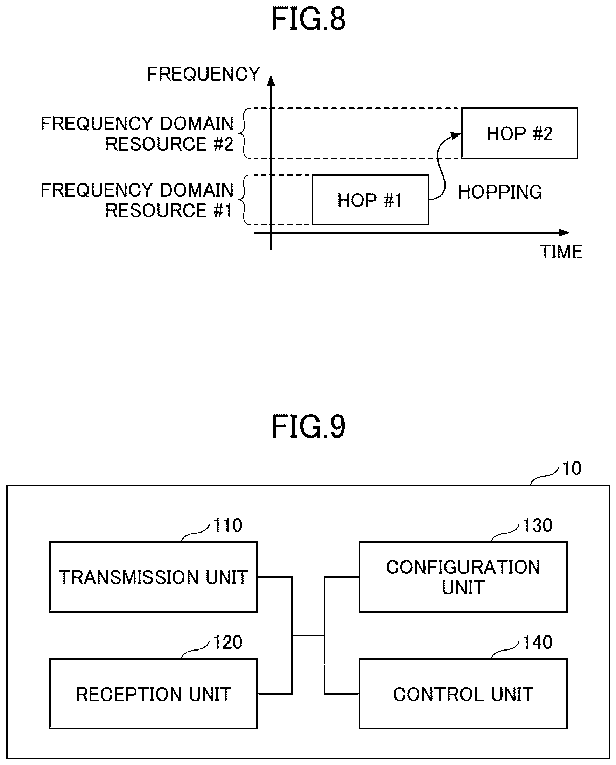

Fig. 8 is a drawing illustrating an example (5) of frequency hopping in an embodiment of the present invention. As illustrated in Fig. 8, in NR Release 16, the frequency hopping applied to SRS (Sounding reference signal) transmission is supported. It is to be noted that "hopping" may mean that transmission is performed by using different frequency domain resources as illustrated in Fig. 8. It is to be noted that the terminal 20 may receive, from the base station 10, a higher layer parameter indicating the frequency hopping to be applied to SRS transmission, and may apply the frequency hopping to the SRS transmission based on the higher layer parameter. The higher layer parameter may be, for example, freqHopping (refer to Non-Patent Document 3).

In Release 16 NR-U, a concept of the RB (Resource block) set has been introduced. In the 5 GHz unlicensed band, carriers that can be used (center frequency and bandwidth) are defined according to the regulations. In general, one RB set corresponds to one carrier that is defined according to the regulations. In addition, the wide band operation in which multiple carriers that are defined according to the regulations are deployed may be expected to be deployed. With respect to the RB set, for example, the number of RBs may be configurable.

In the shared spectrum channel access operation in an unlicensed band, UL transmission may be limited to one RB set. For example, in the frequency hopping that is applied to PUSCH and SRS, each hop may be limited to be located in one RB set.

The unlicensed band is also configured in the 52.6 GHz to 71 GHz band. However, the frequency domain resources have not been clearly defined. For example, there may be flexibility with respect to: whether or not a transmission is to be limited to one band; whether or not a transmission is limited to one carrier; bandwidth operation; LBT operation; and the like. In addition, with respect to the RB set that is defined in Release 16 NR-U, a new definition may be introduced in the deployment in the 52.6 GHz to 71 GHz band.

In the 52.6 GHz to 71 GHz band in which an RB set is not defined or is not configured, the frequency domain resources of PUSCH or SRS are limited to be included in one RB set. In a case where the frequency hopping is configured, the frequency domain resources of PUSCH or SRS are limited to be included in one RB set. As a result, the benefit of the frequency hopping, for example, the benefit of improving the frequency domain diversity will be reduced.

Accordingly, in a case where the frequency hopping is configured for the UL-PUSCH transmission in the 52.6 GHz to 71 GHz unlicensed band, PUSCH hops may be transmitted without being affected by the RB set limitation.

The 52.6 GHz to 71 GHz band may be referred to as FR2-2, or may be referred to as FR2.

The unlicensed band may be referred to as a band in which shared spectrum channel access is performed, or may be referred to as a shared spectrum.

"PUSCH hops are transmitted without being affected by the RB set limitation" may mean the following 1) or 2).

1) The PUSCH hops are transmitted using multiple RB sets. For example, an RB set of the hop #1 may be an RB set different from an RB set of the hop #2.

2) The PUSCH hops are transmitted using X RB sets. X may be defined based on the technical specifications, may be configured by RRC signaling, or may be indicated by MAC-CE or DCI.

It is to be noted that, in the shared spectrum channel access only in FR1, the transmission may be limited to one RB set in a case where the limitation, that is, the frequency hopping is configured.

In addition, in a case where the frequency hopping is configured for the UL-SRS transmission in the 52.6 GHz to 71 GHz unlicensed band, SRS hops may be transmitted without being affected by the RB set limitation.

The 52.6 GHz to 71 GHz band may be referred to as FR2-2, or may be referred to as FR2.

The unlicensed band may be referred to as a band in which shared spectrum channel access is performed, or may be referred to as a shared spectrum.

"SRS hops are transmitted without being affected by the RB set limitation" may mean the following 1) or 2).

1) The SRS hops are transmitted using multiple RB sets. For example, an RB set of the hop #1 may be an RB set different from an RB set of the hop #2.

2) The SRS hops are transmitted using X RB sets. X may be defined based on the technical specifications, may be configured by RRC signaling, or may be indicated by MAC-CE or DCI.

It is to be noted that, in the shared spectrum channel access only in FR1, the transmission may be limited to one RB set in a case where the limitation, that is, the frequency hopping is configured.

It is to be noted that, with respect to the frequency hopping for the PUSCH repetition type A and for the TB transmission over multiple slots, in the operation of the shared spectrum channel access in FR1, UE is not required to expect that two hops of the PUSCH transmission are to be transmitted using different RB sets.

It is to be noted that, with respect to the frequency hopping for the PUSCH repetition type B, in the operation of the shared spectrum channel access in FR1, UE is not required to expect that two hops of the PUSCH transmission are to be transmitted using different RB sets.

It is to be noted that, with respect to the frequency hopping for the PUSCH repetition type A and for the TB transmission over multiple slots, in the operation of the shared spectrum channel access in FR1, UE is not required to expect that two hops of the PUSCH transmission are to be transmitted using different RB sets. In addition, with respect to the frequency hopping for the PUSCH repetition type A and for the TB transmission over multiple slots, in an operation of the shared spectrum channel access in FR2-2, in a case where a higher layer parameter IntraCellGuardBandsPerSCS (refer to Non-Patent Document 3) is configured for the UL carrier and the DL carrier whose SCS configuration is $\mu$, UE is not required to expect that two hops of the PUSCH transmission are to be transmitted by using different RB sets. It is to be noted that IntraCellGuardBandsPerSCS may be a parameter for configuring a guard band between RB sets in a case of using multiple RB sets.

It is to be noted that, with respect to the frequency hopping for the PUSCH repetition type A and for the TB transmission over multiple slots, in the operation of the shared spectrum channel access in FR1, UE is not required to expect that two hops of the PUSCH transmission are to be transmitted using different RB sets. In addition, with respect to the frequency hopping for the PUSCH repetition type A and for the TB transmission over multiple slots, in an operation of the shared spectrum channel access in FR2-2, in a case where a higher layer parameter IntraCellGuardBandsPerSCS is configured for the UL carrier whose SCS configuration is $\mu$, UE is not required to expect that two hops of the PUSCH transmission are to be transmitted by using different RB sets.

It is to be noted that, with respect to the frequency hopping in the SRS transmission, in an operation of the shared spectrum channel access in FR1, UE is not required to expect that two hops of the PUSCH transmission are to be transmitted using different RB sets.

It is to be noted that, with respect to the frequency hopping in the SRS transmission, in an operation of the shared spectrum channel access in FR2-2, in a case where a higher layer parameter IntraCellGuardBandsPerSCS (refer to Non-Patent Document 3) is configured for the UL carrier and the DL carrier whose SCS configuration is $\mu$, UE is not required to expect that two hops of the SRS transmission are to be transmitted by using different RB sets.

It is to be noted that, with respect to the frequency hopping in the SRS transmission, in an operation of the shared spectrum channel access in FR2-2, in a case where a higher layer parameter IntraCellGuardBandsPerSCS is configured for the UL carrier whose SCS configuration is $\mu$, UE is not required to expect that two hops of the PUSCH transmission are to be transmitted by using different RB sets.

Which one of the above-described embodiments is to be used may be configured by a higher layer parameter, may be reported by the terminal 20 as the UE capability, may be defined in the technical specification, or may be determined based on the higher layer parameter and the UE capability.

It is to be noted that the UE capability that indicates whether or not the frequency hopping for scheduling of multiple PUSCHs is supported may be defined. It is to be noted that the UE capability that indicates whether or not the enhanced frequency hopping method for scheduling of multiple PUSCHs is supported may be defined. The UE capability that indicates whether or not a new RRC parameter for indicating the frequency hopping mode for scheduling of multiple PUSCHs is supported may be defined.

It is to be noted that the UE capability that indicates whether or not the frequency hopping that is not affected by the RB set limitation is supported may be defined. The UE capability that indicates whether or not a new RRC parameter for indicating the frequency hopping mode that is not affected by the RB set limitation is supported may be defined.

According to the above-described embodiments, when RB sets are introduced, the terminal 20 can apply the frequency hopping using a method with high flexibility in a case of transmitting PUSCH or SRS.

In other words, the frequency hopping can be flexibly applied in the wireless communication system.

(Device configuration)

Next, a functional configuration example of the base station 10 and the terminal 20 for performing the processes and operations described above will be described. The base station 10 and the terminal 20 include functions for implementing the embodiments described above. It should be noted, however, that each of the base station 10 and the terminal 20 may include only some of the functions in an embodiment.

<Base station 10>

Fig. 9 is a diagram illustrating an example of a functional configuration of the base station 10. As shown in Fig. 9, the base station 10 includes a transmission unit 110, a reception unit 120, a configuration unit 130, and a control unit 140. The functional configuration illustrated in Fig. 9 is merely an example. Functional divisions and names of functional units may be anything as long as operations according to an embodiment of the present invention can be performed.

The transmission unit 110 includes a function for generating a signal to be transmitted to the terminal 20 side and transmitting the signal wirelessly. Further, the transmission unit 110 transmits an inter-network-node message to another network node. The reception unit 120 includes a function for receiving various signals transmitted from the terminal 20 and acquiring, for example, information of a higher layer from the received signals. Further, the transmission unit 110 has a function to transmit NR-PSS, NR-SSS, NR-PBCH, DL/UL control signals, and the like to the terminal 20. Further, the reception unit 120 receives an inter-network-node message from another network node.

The configuration unit 130 stores preset configuration information and various configuration information items to be transmitted to the terminal 20 in a storage apparatus and reads the preset configuration information from the storage apparatus as necessary. Contents of the configuration information are, for example, information related to the frequency hopping configuration.

The control unit 140 performs control related to the frequency hopping configuration as described in the embodiments. In addition, the control unit 140 performs scheduling. The functional units related to signal transmission in the control unit 140 may be included in the transmission unit 110, and the functional units related to signal reception in the control unit 140 may be included in the reception unit 120.

<Terminal 20>

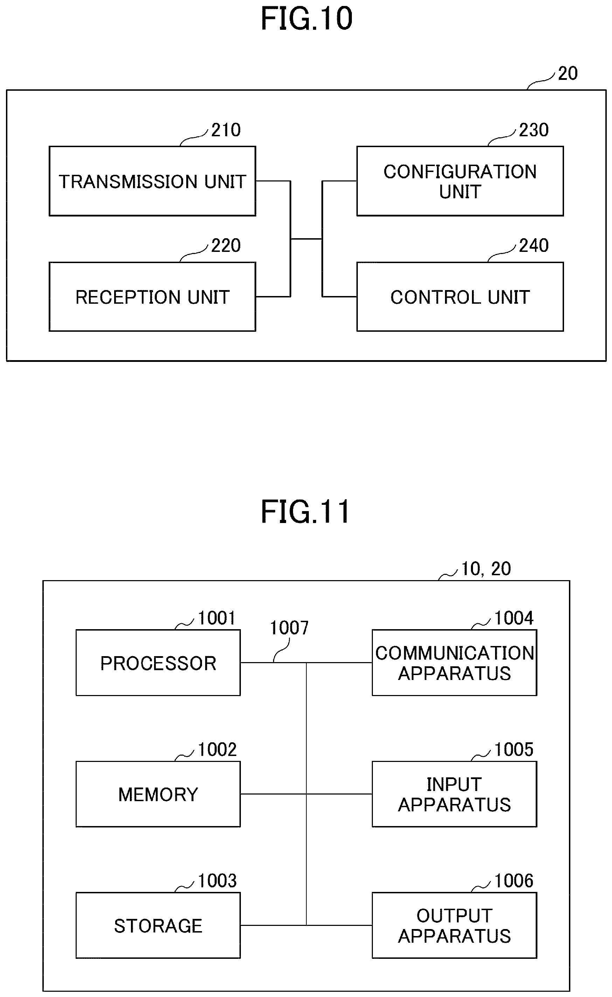

Fig. 10 is a diagram illustrating an example of a functional configuration of the terminal 20. As shown in Fig. 10, the terminal 20 includes a transmission unit 210, a reception unit 220, a configuration unit 230, and a control unit 240. The functional configuration illustrated in Fig. 10 is merely an example. Functional divisions and names of functional units may be anything as long as operations according to an embodiment of the present invention can be performed.

The transmission unit 210 generates a transmission signal from transmission data and transmits the transmission signal wirelessly. The reception unit 220 receives various signals wirelessly and obtains higher layer signals from the received physical layer signals. Further, the reception unit 220 has a function for receiving NR-PSS, NR-SSS, NR-PBCH, DL/UL/SL control signals, etc., transmitted from the base station 10. Further, for example, with respect to the D2D communications, the transmission unit 210 transmits, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 220 receives, from the another terminal 20, PSCCH, PSSCH, PSDCH, or PSBCH.

The configuration unit 230 stores various configuration information items received by the reception unit 220 from the base station 10. In addition, the configuration unit 230 also stores pre-configured configuration information. Contents of the configuration information are, for example, information related to the frequency hopping configuration.

The control unit 240 performs control related to the frequency hopping configuration as described in the embodiments. The functional units related to signal transmission in the control unit 240 may be included in the transmission unit 210, and the functional units related to signal reception in the control unit 240 may be included in the reception unit 220.

(Hardware structure)

The block diagrams that have been used to describe the above embodiments (Fig. 9 and Fig. 10) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

For example, the base station 10, the terminal 20, etc., according to an embodiment of the present disclosure may function as a computer for processing the radio communication method of the present disclosure. Fig. 11 is a diagram to show an example of a hardware structure of the base station 10 and the terminal 20 according to one embodiment. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 9 may be implemented by control programs that are stored in the memory 1002 and that operate on the processor 1001. In addition, for example, the control unit 240 of the terminal 20 illustrated in Fig. 10 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output apparatus that outputs something to the outside (e.g., display, speaker, LED lamp). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

Fig. 12 shows an example of a configuration of a vehicle 2001. As shown in Fig. 12, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit, to an external device by using wireless communications, at least one of: a signal from the above-described various sensors 2021 to 2028 that is input to the electronic control unit 2010; information that is obtained based on the signal; or information based on an input obtained from outside (user) via the information service unit 2012. The electronic control unit 2010, the various sensors 2021 to 2028, the information service unit 2012, or the like, may be referred to as an input unit for receiving an input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display and a speaker, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

(Embodiment summary)

As described above, according to an embodiment of the present invention, a terminal is provided. The terminal includes: a reception unit configured to receive, from a base station, a parameter related to frequency hopping to be applied to SRS (Sounding reference signal) in an unlicensed band; and a transmission unit configured to perform transmission to the base station using a plurality of RB (Resource block) sets by applying the frequency hopping to the SRS, based on the parameter.

According to the above-described configuration, when RB sets are introduced, the terminal 20 can apply the frequency hopping using a method with high flexibility in a case of transmitting PUSCH or SRS. In other words, the frequency hopping can be flexibly applied in the wireless communication system.

The transmission unit may transmit a first hop of the SRS and a second hop of the SRS by using different RB sets. According to the above-described configuration, when RB sets are introduced, the terminal 20 can apply the frequency hopping using a method with high flexibility in a case of transmitting PUSCH or SRS.

In a specific frequency band, the transmission unit is not required to be expected to perform transmission to the base station using a plurality of RB sets by applying frequency hopping to the SRS. According to the above-described configuration, when RB sets are introduced, the terminal 20 can apply the frequency hopping using a method with high flexibility in a case of transmitting PUSCH or SRS.

The transmission unit is not required to be expected to perform transmission to the base station using a plurality of RB sets by applying frequency hopping to the SRS in a case where the parameter includes a parameter for configuring a guard band between RB sets. According to the above-described configuration, when RB sets are introduced, the terminal 20 can apply the frequency hopping using a method with high flexibility in a case of transmitting PUSCH or SRS.

The transmission unit may transmit the SRS using a number of RB sets, the number being indicated by the base station. According to the above-described configuration, when RB sets are introduced, the terminal 20 can apply the frequency hopping using a method with high flexibility in a case of transmitting PUSCH or SRS.

In addition, according to an embodiment of the present invention, a communication method performed by a terminal is provided. The communication method includes: receiving, from a base station, a parameter related to frequency hopping to be applied to SRS (Sounding reference signal) in an unlicensed band; and performing transmission to the base station using a plurality of RB (Resource block) sets by applying frequency hopping to the SRS, based on the parameter.

According to the above-described configuration, when RB sets are introduced, the terminal 20 can apply the frequency hopping using a method with high flexibility in a case of transmitting PUSCH or SRS. In other words, the frequency hopping can be flexibly applied in the wireless communication system.

(Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, the information indication may be performed by physical layer signaling (e.g., DCI (Downlink Control Information), UCI (Uplink Control Information)), higher layer signaling (e.g., RRC (Radio Resource Control) signaling, MAC (Medium Access Control) signaling, broadcast information (MIB (Master Information Block), SIB (System Information Block))), other signals, or combinations thereof. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

The order of processes, sequences, flowcharts, and so on that have been used to describe the aspects/embodiments in the present specification may be reordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station is an object that can move, and the moving speed can be any speed. In addition, a mobile station that is not moving is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) device such as a sensor.

Furthermore, the base station in the present disclosure may be interpreted as a user terminal. For example, each aspect/embodiment of the present disclosure may be applied to the structure that replaces a communication between a base station and a user terminal with a communication between a plurality of terminals 20 (for example, which may be referred to as "Device-to-Device (D2D)," "Vehicle-to-Everything (V2X)," and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompasses a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission or reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, or the like.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval, "TTI," a plurality of consecutive subframes may be referred to as a "TTI," or one slot or one mini-slot may be referred to as a "TTI." In other words, at least one of a subframe or a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for terminals 20, scheduling of allocating radio resources (such as a frequency bandwidth and transmit power available for each terminal 20) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (Res). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a terminal 20.

At least one of configured BWPs may be active, and a terminal 20 may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

The present international patent application is based on and claims priority to Japanese patent application No. 2022-167985 filed on October 19, 2022, the entire contents of which are hereby incorporated herein by reference.

DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Memory
1003 Storage
1004 Communication apparatus
1005 Input apparatus
1006 Output apparatus
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

**Claims**

1. A terminal comprising:

   a reception unit configured to receive, from a base station, a parameter related to frequency hopping to be applied to SRS (Sounding reference signal) in an unlicensed band; and

a transmission unit configured to perform transmission to the base station using a plurality of RB (Resource block) sets by applying the frequency hopping to the SRS, based on the parameter.

2. The terminal as claimed in claim 1, wherein
the transmission unit transmits a first hop of the SRS and a second hop of the SRS by using different RB sets.

3. The terminal as claimed in claim 1, wherein
in a specific frequency band, the transmission unit is not expected to perform transmission to the base station using a plurality of RB sets by applying frequency hopping to the SRS.

4. The terminal as claimed in claim 1, wherein
the transmission unit is not expected to perform transmission to the base station using a plurality of RB sets by applying frequency hopping to the SRS in a case where the parameter includes a parameter for configuring a guard band between RB sets.

5. The terminal as claimed in claim 1, wherein
the transmission unit transmits the SRS using a number of RB sets, the number being indicated by the base station.

6. A communication method performed by a terminal, the communication method comprising:

receiving, from a base station, a parameter related to frequency hopping to be applied to SRS (Sounding reference signal) in an unlicensed band; and
performing transmission to the base station using a plurality of RB (Resource block) sets by applying the frequency hopping to the SRS, based on the parameter.

# FIG.1

EP 4 608 031 A1

# FIG.2

FR1
{15, 30, 60} kHz SCS
5〜100 MHz BW

FR2-1
{60, 120, (240)} kHz
SCS
50〜400 MHz BW

52.6-71 GHz (FR2-2)

FREQUENCY

0.41 GHz    1 GHz    7.125 GHz    10 GHz    24.25 GHz    52.6 GHz    71 GHz    100 GHz

# FIG.3

START

S1

MULTIPLE PUSCHs ARE SCHEDULED BY DCI

S2

FREQUENCY HOPPING IS APPLIED TO THE MULTIPLE PUSCHs
TO BE TRANSMITTED

END

# FIG.4

SLOT BOUNDARY

| PUSCH #1 | PUSCH #2 | PUSCH #3 | PUSCH #4 |

HOPPING IS APPLIED

SLOT BOUNDARY

FREQUENCY RANGE 1

| PUSCH #1 | PUSCH #2 |

FREQUENCY RANGE 2

| PUSCH #3 | PUSCH #4 |

INTER-SLOT FREQUENCY HOPPING

EP 4 608 031 A1

# FIG.5

SLOT BOUNDARY

| PUSCH #1 | PUSCH #2 | PUSCH #3 | PUSCH #4 |

HOPPING IS APPLIED

SLOT BOUNDARY

FREQUENCY RANGE 1 — PUSCH #1 | PUSCH #2 — PUSCH #3

FREQUENCY RANGE 2 — PUSCH #2 — PUSCH #4

INTRA-SLOT FREQUENCY HOPPING

EP 4 608 031 A1

# FIG.6

SLOT BOUNDARY

| PUSCH #1 | PUSCH #2 | PUSCH #3 | PUSCH #4 |

HOPPING IS APPLIED

SLOT BOUNDARY

FREQUENCY RANGE 1 — PUSCH #1 — PUSCH #3

FREQUENCY RANGE 2 — PUSCH #2 — PUSCH #4

INTER-PUSCH FREQUENCY HOPPING

FIG.7

SLOT BOUNDARY

| PUSCH #1 | PUSCH #2 | PUSCH #3 | PUSCH #4 |

HOPPING IS APPLIED

SLOT BOUNDARY

FREQUENCY RANGE 1
FREQUENCY RANGE 2

PUSCH #1 / PUSCH #2 / PUSCH #3 / PUSCH #4

INTRA-PUSCH FREQUENCY HOPPING

# FIG.8

# FIG.9

# FIG.10

# FIG.11

# FIG.12

EP 4 608 031 A1

## INTERNATIONAL SEARCH REPORT

| International application No. |
| --- |
| **PCT/JP2023/031435** |

**A. CLASSIFICATION OF SUBJECT MATTER**

*H04W 72/044*(2023.01)i; *H04L 27/26*(2006.01)i; *H04W 16/14*(2009.01)i; *H04W 72/0446*(2023.01)i; *H04W 72/0453*(2023.01)i; *H04W 72/20*(2023.01)i
FI: H04W72/044 110; H04W16/14; H04W72/20; H04W72/0453; H04L27/26 113; H04L27/26 114; H04W72/0446

According to International Patent Classification (IPC) or to both national classification and IPC

**B. FIELDS SEARCHED**

Minimum documentation searched (classification system followed by classification symbols)

H04B7/24-7/26; H04W4/00-99/00; H04L27/26

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | HUAWEI. HISILICON. Discussion on the frequency hopping for single/multi PUSCH transmission[online]. 3GPP TSG RAN WG1 #107-e R1-2110826. 19 November 2021 [retrieved on 07 November 2023] in particular, sections 1-3 | 1-3, 6 |
| A | | 4-5 |
| Y | WO 2022/031062 A1 (WILUS INSTITUTE OF STANDARDS AND TECHNOLOGY INC.) 10 February 2022 (2022-02-10) paragraphs [0159], [0168], [0391], [0415]-[0417], [0431] | 1-2, 6 |
| A | | 3-5 |
| Y | Moderator (VIVO). Summary of [107-e-NR-NRU-03] Issue#T3: Frequency hopping for single/multi-PUSCH[online]. 3GPP TSG RAN WG1 #107-e R1-2112811. 19 November 2021 [retrieval date 07 November 2023] in particular, section 3 | 1-3, 6 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **07 November 2023** | **21 November 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
**Information on patent family members**

International application No.

**PCT/JP2023/031435**

| Patent document cited in search report | Publication date (day/month/year) | Patent family member(s) | Publication date (day/month/year) |
|---|---|---|---|
| WO 2022/031062 A1 | 10 February 2022 | JP 2023-537023 A paragraphs [0120], [0129], [0352], [0376]-[0378], [0392] US 2023/0189308 A1 KR 10-2023-0005223 A CN 116018849 A | |

## REFERENCES CITED IN THE DESCRIPTION

**Patent documents cited in the description**

- JP 2022167985 A

**Non-patent literature cited in the description**

- *3GPP TS 38.300 V17.2.0*, September 2022
- *3GPP TS 38.306 V17.2.0*, September 2022
- *3GPP TS 38.331 V17.2.0*, September 2022